# EUROPEAN PATENT SPECIFICATION

(11) **EP 1 300 810 B1**
(45) Date of publication and mention of the grant of the patent: **16.12.2009**
(21) Application number: 02380197.0
(22) Date of filing: 23.09.2002
(51) Int. Cl.: G07D 7/12

(54) **Method and device for validating security papers**
Verfahren und Vorrichtung zum Prüfen von Wertpapieren
Procédé et dispositif pour vérifier des papiers de valeur

(30) Priority: 21.09.2001 ES 200102117
(43) Date of publication of application: 09.04.2003
(73) Proprietor: FABRICA NACIONAL DE MONEDA Y TIMBRE, 28009 Madrid (ES)
(72) Inventor: Merchan Palacios, Miguel, 28009 Madrid (ES); Davo Ferro, Rafael, 28009 Madrid (ES)
(74) Representative: Carpintero Lopez, Francisco

(56) References cited:
- US-A- 3 922 090
- US-A- 4 075 604
- US-A- 5 719 939
- US-A- 5 974 150
- US-B1- 6 246 061

## Description

### OBJECT OF THE INVENTION

The present invention relates to a control procedure that has been specially conceived to guarantee, by means of a specific characterisation, the paper used in the obtaining of different types of documents, like for example banknotes, in order to render impossible or more difficult potential counterfeiting thereof, based on the insertion inside the same of fibrils of different colours and in certain proportions.

The invention also concerns the device which allows the performance of said control and, in consequence, validation of the security paper as such.

### BACKGROUND OF THE INVENTION

In the field of security paper, a great many solutions are known intended to characterise or personalise the same, which make more difficult its production or copying in a fraudulent way.

Within the multiple solutions of which mention has just been made, one of them consists in using fibrils which are included in the paper pulp, during the manufacturing process thereof, coloured, invisible with natural light but visible with ultraviolet light, so that by means of a certain combination of colours, like for example by means of the participation of fibrils of red, green and blue, in certain proportions, the intended personalization is achieved.

To date the validation of security paper with these components is carried out in a manual way, conducting a kind of sampling on some documents, using for this an appropriate ultraviolet light source and proceeding to the visual detection of the presence of fibres of the different colours and the counting thereof.

Obviously this solution is slow and laborious, with a high risk of error in the counting of the fibrils and with samplings which are frequently of scant significance, since the inherent laboriousness of the process does not admit the use of a high number of samples.

On the other hand and although the counting of the fibrils of each colour can be exact, using for this the time that is necessary, the uniformity or homogeneity in the distribution thereof depends on the criterion of each person that is carrying out the work, which does not allow an adequate precision in the control of this parameter.

### DESCRIPTION OF THE INVENTION

Based on the use of fibrils of different colours visible only in ultraviolet light, the procedure of the invention consists in using a video camera as means of receiving the images, with its lens equipped with filters which permit the suppression of large peaks which are produced due to the radiation of the illuminating lamps, so that the light response of the fibrils covers the whole visible spectrum, different wavelengths are produced within the near infrared. The image captured by the aforementioned video camera is applied to a computer equipped with an acquisition card, with its corresponding computer program, wherein by means of a digital process the different fibres of the paper are analysed, separated and counted, in their aforementioned different colours.

In more specific terms, the following operational steps are carried out in the computer:
- Histogram of the image. Starting from the histogram for each group of red, green and blue fibrils, the most appropriate colour interval is obtained, that is, the interval of said histogram is maximised, sequentially for each of the three colours.
- Next the threshold calculation is carried out, that is, for the colouring of the pixels of the image which fall within the colour interval corresponding to each fibril group, in the also corresponding colour thereof, whilst the pixels that fall outside said intervals change to black.
- Next the subtraction takes place of the particles of the image that are of a size smaller than a predetermined number of pixels, so that noise and dust specks are eliminated, among other perturbations.
- Erosion and dilation are subsequently carried out, the objective of which is, on one hand to connect particles which being single have become separated in the image, and on the other to separate those that have been joined.
- Convolutions are subsequently carried out, applying filters (high pass, low pass) to highlight or to smooth different aspects of the image.
- Next a morphological analysis is carried out which allows the number of fibres of each colour to be discovered, as well as other parameters such as size, position, centre of gravity, etc.
- Finally the validation is performed of the image n accordance with the established program, which permits determination of whether the sample taken is or is not within the specifications, to be accepted or rejected.

The device for the performance of the mentioned procedure incorporates a system of illumination provided with two light panels with several fluorescent lamps with ultraviolet radiation, one of them located under the sheet of paper, to obtain backlighting, and the other placed in one of the lateral walls of the device, in a position perpendicular to the sheet, so that with the help of a mirror located on the opposite face, a frontal and diffuse illumination is obtained. Logically, the device is provided with switches for general off/on purposes and for independent operation of each of the panels, in order to obtain two different illuminations to allow visualisation of both the figures located nearer one of the faces of the sheet and the figures which are deeper and therefore more difficult to visualise with a single source of illumination.

The device also incorporates a CCD camera, with adjustment of gain, colour temperature and reference white, with the aforementioned filter which only allows the visible component of the spectrum to pass, suppressing the infrared and ultraviolet components. Said camera sends the image captured in compound video format to the acquisition card incorporated in the computer, which allows adjustment of brilliance, contrast and saturation of image.

A procedure for testing security paper is known from patent US-5.974.150, which is based on the computer analysis of a digital image of the security paper. In this document the authentication procedure is not based on the comparation of the properties of the fibres read from a sample, with respect to pre-establish specifications.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings in which, by way of illustration and not restrictively, the following has been represented:
Figure 1 shows, according to a schematic representation, the device for the control of security paper which the invention proposes.
Figure 2 shows, according to a view in perspective, a specific example of practical embodiment for the device of the previous figure.
Figure 3 shows, finally, a block diagram corresponding to the procedure of the invention.

### PREFERRED EMBODIMENT OF THE INVENTION

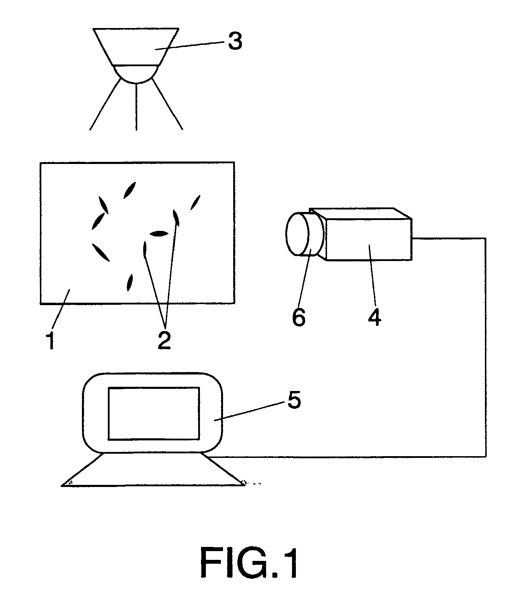

In figure 1 a paper piece has been represented (1) with fibrils (2) of the aforementioned, red, green and blue colours, fibrils which will be visualized with the collaboration of ultraviolet light panels (3) the radiation from which is located in the range between 300 and 420 nm, this being the most appropriate radiation to produce a light response of the different fibrils, whereby the responses in wavelength are the following:
- Red fibres: 400 < 1 < 450 nanometres
- Green fibres: 450 < 1 < 550 nanometres
- Blue fibres: 550 < 1 < 680 nanometres.

Thus, the light response of the fibrils covers the whole visible spectrum.

The image produced on the paper (1) by the aforementioned illumination for the fibrils (2) is captured by a camera (4) and fed to a computer (5) equipped with a data acquisition card.

The video camera (4) incorporates in front of its lens a filter (6), to receive strictly or exclusively the images corresponding to the visible spectrum.

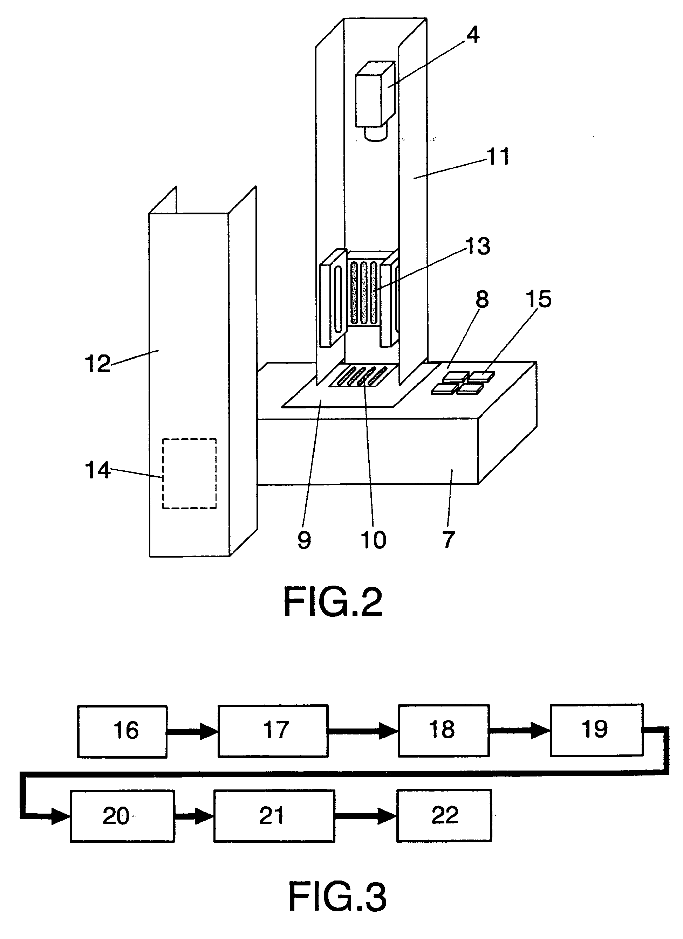

From the practical point of view and as figure 2 shows, the device is materialised in a casing (7) whereon un upper platform (8) is defined with a transparent area (9), for installation of the paper (1), under which is located a luminous panel (10) with several fluorescent lamps with ultraviolet radiation, in order to achieve backlighting of said paper (1), being mounted on the casing (7) and more specifically on the aforementioned area (9), a tower (11), vertically fluted, which is closed by means of a lateral cover (12), said tower (11) housing, at a lower level, a second luminous panel (13) of characteristics similar to that previously mentioned (10), which is located in a position perpendicular to the paper sheet (1), in such a way that with a mirror (14) located inside the cover (12) a frontal and diffuse illumination of the paper is obtained, collaborating with these luminous panels (10) and (13) is a control keyboard (15) also mounted on the upper base of the aforementioned casing (7).

In the upper area of the tower (11) and in a situation perpendicular to the paper sheet (1), the CCD camera (4) is located with its corresponding filter.

In a more specific manner the camera (4) will be a 3-CCD camera, with gain adjustment in RGB, and as previously stated with colour temperature and reference white among others, as well as with a filter which allows only the visible component of the spectrum to pass, suppressing the infrared and ultraviolet components.

The image captured in the camera (4) is sent, in composite video format, to the acquisition card of the computer (5), which allows adjustment of brilliance, contrast and saturation of the captured image. The image is captured at 24 bits (RGB) and with uncompressed BMP format.

The captured image is conditioned in the computer (5), applying different digital processes.

In a more specific manner and as is shown in the block diagram of figure 3, a histogram is first obtained of the image (16) for each group of red, green and blue fibrils, from which the most appropriate HSL (Hue, Saturation, Lightness) colour interval is extracted, specifically in the following manner:
- The histogram (H) is obtained of the image for the red fibrils.
- Within a precisely defined area (with a certain safety margin) the interval is sought where said histogram reaches maximum.
- The two previous steps are repeated for the histograms (S) and (L).
- The process is repeated for the green fibrils and later for the blue ones.
- At the end an HSL interval is obtained for each fibril group with a procedure which is dynamic, that is, the interval obtained varies for each image, whereby the fibre search is optimised.

Subsequently a threshold calculation (17) is carried out, consisting in putting for the corresponding colour (red, green or blue) the pixels of the image which fall within the HSL intervals corresponding to the fibril group, whilst the pixels which are outside said intervals change to black.

Next a phase (18) of particle elimination takes place wherein the image particles are removed which have a size smaller than a certain number of pixels, in order to eliminate noise and dust specks, among other sources of interference.

Subsequently an erosion and dilation stage (19) is carried out, the objective of which is, on one hand to connect particles which being single have been separated in the image, and on the other hand to separate those that have been joined.

A convolution phase (20), applying different filters (high pass, low pass) allows highlighting or softening of different aspects of the image.

A morphological analysis (21) serves to discover the number of fibres of each colour, as well as other parameters like the size of the fibres, position, centre of gravity, etc.

Finally a validation (22) of the image is carried out, in accordance with a series of rules previously established so that the program can determine whether the sample analysed is or is not inside the specifications, thereby being accepted or rejected.

Before carrying out an analysis it is necessary to adjust certain parameters, specifically the illumination, and the positioning and size of the picture to be captured.

The adjustment of the illumination is carried out by means of a colour master, in such a way that for said master a certain HSL response has to be achieved. If the illumination is inadequate, the response will fall outside acceptable limits.

To fix the position and size of the image to be captured it is necessary to focus on a square calibrated to the size it is desired to capture, in such a way that the image is perfectly focused inside said square and with the limits thereof on the border of the captured image. In this way the pixels/nm ratio will always be the same when carrying out the morphological analysis.

For the actual analysis of the fibrils and after introducing the paper sheet (1) to be analysed under the system of illumination (3) one proceeds, by means of the program, to capture the image. Automatically said image will be analysed counting the number of fibrils of each colour and displaying them on screen. Additionally other results can be given, like the mean size of the fibres, the density of fibres and the percentage surface area occupied by them, among others. Both the image captured and the analysis performed can be stored and recovered later.

## Claims

1. Procedure for control of security paper, which based on the use of fibrils of different colours, preferably red, green and blue, invisible in natural light, embedded in the paper, for subsequent visual detection thereof by means of illuminating the paper with ultraviolet light, is **characterised in that** it consist on counting the fibrils present in the security paper, using for this as means of capturing the image of the fibrils (2) on the paper (1) a video camera (4) which feeds said images to a computer (5), provided with an acquisition card which allows adjustment of the brilliance, contrast and saturation of the captured image, at 24 bits and with uncompressed BMP format, the image captured being processed by means of the following digital processes:
- obtaining, from the histogram of the image (16) for each group of red, green and blue fibrils, the most appropriate HSL (hue-saturation-lightness) colour interval, trying to obtain, independently and within each colour, the histogram for the gain, for the saturation and for the lightness with maximum value interval;
- threshold calculation (17), consisting in providing the pixels of the image with the corresponding colour (red, green or blue), which fall within the HSL intervals corresponding to each group of fibrils (red, green or blue), whilst the pixels that fall outside said intervals change to black;
- subtraction (18) of the particles of the image that have a size smaller than a certain number of pixels to eliminate noise and dust specks, among other sources of interference;
- erosions and dilations (19) to connect particles which being single have been separated in the image and to separate those which have been joined;
- convolutions (20), applying different filters (high pass, low pass), to highlight or to soften different aspects of the image;
- morphological analysis (21) to discover the number of fibres of each colour, size of the fibres, position, and centre of gravity;
- validation (22) of the image in accordance with preestablished specifications in order to determine whether the sample of security paper analysed is or is not inside said specifications, whereby it is accepted or rejected.

2. Device for the implementation of the procedure for control of the previous claim, comprising a system of illumination (3) of the paper (1) bearer of the coloured fibrils (2), a camera (4), as means of acquisition of images, and a computer (5) provided with an acquisition card, **characterised in that** it further comprises
a casing (7), provided with an upper platform (8) wherein is established a transparent area (9) for location of the paper (1), under which a luminous panel (10) is mounted, with several fluorescent lamps with radiation in ultraviolet, which illuminates the paper (1) with backlighting, arising from said platform (8) a tower (11) in which is housed, at a lower level a second luminous panel (13), similar to the previous one, in a perpendicular position with respect to the platform (8) and with which a mirror (14) collaborates, said mirror located in the opposed face of the tower (11), preferably in the cover (12) for closing the same, so that through this mirror (14) a frontal and diffuse illumination of the paper is achieved, whilst in the upper area of the tower the video camera (4) is mounted, in a disposition perpendicular to the platform (8) and with its lens accompanied by at least a filter which only allows the visible component of the spectrum to pass, eliminating the infrared and ultraviolet components.

3. Device, according to claims 2, **characterised in that** the camera (4) is a 3-CCD camera, with adjustment of RGB gain, colour temperature and reference white among others.

4. Device, according to claims 2 and 3, **characterised in that** the system of illumination (3-10, 13), is accompanied by a control keyboard (15) which allows general off/on switching and the independent powering of each of the luminous panels (10-13).

5. Computer program for the implementation of the procedure of claim 1.

## Patentansprüche

1. Verfahren zur Kontrolle von Sicherheitspapier, welches auf der Grundlage der Verwendung von Fibrillen unterschiedlicher Farben, vorzugsweise Rot, Grün und Blau, welche in natürlichem Licht unsichtbar sind und in dem Papier zur anschließenden Sichterfassung derselben mittels Beleuchtung des Papiers mit ultraviolettem Licht eingebettet sind, **dadurch gekennzeichnet ist, dass** es aus dem Zählen der in dem Sicherheitspapier vorhandenen Fibrillen besteht, wobei dazu eine Videokamera (4) als Mittel zum Erfassen des Bildes der Fibrillen (2) auf dem Papier (1) verwendet wird, welche die Bilder in einen Computer (5) einspeist, welcher mit einer Erfassungskarte versehen ist, welche die Einstellung von Helligkeit, Kontrast und Sättigung des erfassten Bildes mit 24 Bit und mit einem unkomprimierten BMP-Format erlaubt, wobei das erfasste Bild mittels der folgenden digitalen Prozesse verarbeitet wird:
- Erhalten aus dem Histogramm des Bildes (16) für jede Gruppe von roten, grünen und blauen Fibrillen, das geeignetste HSL (Farbton-Sättigung-Helligkeit) - Farbintervall, wobei versucht wird, unabhängig und innerhalb jeder Farbe das Histogramm für die Verstärkung, für die Sättigung und für die Helligkeit mit dem maximalen Werteintervall zu erhalten;
- Schwellenwertberechnung (17), bestehend daraus, dass die Pixel des Bildes mit der entsprechenden Farbe (rot, grün oder blau) bereitgestellt werden, welche in die HSL-Intervalle fallen, die jeder Gruppe von Fibrillen (rot, grün oder blau) entsprechen, während die Pixel, die außerhalb der Intervalle fallen, in schwarz geändert werden;
- Subtraktion (18) der Partikel des Bildes, die eine Größe haben, die kleiner ist als eine bestimmte Anzahl von Pixeln, um Rauschen und Staubflecken unter anderen Störungsquellen zu beseitigen;
- Erosionen und Dilatationen (19), um Partikel, welche einzeln sind und in dem Bild getrennt wurden, zu verbinden, und diejenigen zu trennen, die verbunden wurden;
- Konvolutionen (20) unter Anwendung unterschiedlicher Filter (Hochpass, Tiefpass), um unterschiedliche Aspekte des Bildes hervorzuheben oder abzuschwächen;
- morphologische Analyse (21), um die Anzahl der Fasern jeder Farbe, die Größe der Fasern, die Position und den Schwerpunkt zu erfassen;
- Validierung (22) des Bildes in Übereinstimmung mit vorab festgelegten Spezifikationen, um zu bestimmen, ob die analysierte Probe des Sicherheitspapiers im Rahmen der Spezifikationen liegt oder nicht, womit sie akzeptiert oder zurückgewiesen wird.

2. Vorrichtung zur Umsetzung des Kontrollverfahrens gemäß dem vorstehenden Anspruch, enthaltend ein System zur Beleuchtung (3) des die farbigen Fibrillen (2) tragenden Papiers (1), eine Kamera (4) als Mittel zur Bilderfassung und einen Computer (5), der mit einer Erfassungskarte ausgestattet ist, **dadurch gekennzeichnet, dass** sie ferner enthält
ein Gehäuse (7), welches mit einer oberen Plattform (8) versehen ist, in welcher ein transparenter Bereich (9) zur Platzierung des Papiers (1) eingerichtet ist, unter welchem ein Leuchtfeld (10) mit mehreren Leuchtstofflampen mit Ultraviolettstrahlung montiert ist, welches das Papier (1) von der Rückseite beleuchtet, einen auf der Plattform (8) stehenden Turm (11), in welchem in einer unteren Ebene ein zweites Leuchtfeld (13) ähnlich dem vorstehend beschriebenen in einer senkrechten Position relativ zu der Plattform (8) angeordnet ist und mit welchem ein Spiegel (14) zusammenwirkt, welcher Spiegel an der gegenüberliegenden Fläche des Turms (11) angeordnet ist, vorzugsweise in der Abdeckung (12) zum Verschließen desselben, so dass durch diesen Spiegel (14) eine frontale und diffuse Beleuchtung des Papiers erreicht wird, während in dem oberen Bereich des Turms eine Videokamera (4) in einer zu der Plattform (8) senkrechten Position montiert ist, deren Linse mit mindestens einem Filter kombiniert ist, der den Durchtritt nur der sichtbaren Komponente des Spektrums erlaubt und die Infrarot- und Ultraviolett-Komponenten eliminiert.

3. Vorrichtung nach Anspruch 2, **dadurch gekennzeichnet, dass** die Kamera (4) eine 3-CCD-Kamera mit Einstellmöglichkeit unter anderem von RGB-Verstärkung, Farbtemperatur und Bezugsweiß ist.

4. Vorrichtung nach Anspruch 2 und 3, **dadurch gekennzeichnet, dass** das Beleuchtungssystem (3-10, 13) mit einer Steuertastatur (15) kombiniert ist, welche das allgemeine Ein-/Ausschalten sowie die unabhängige Leistungsversorgung jedes der Leuchtfelder (10-13) erlaubt.

5. Computerprogramm zur Implementierung des Verfahrens nach Anspruch 1.

## Revendications

1. Procédé de contrôle de papiers de valeur, qui, en se basant sur l'utilisation de fibrilles de différentes couleurs, de préférence rouge, verte et bleue, invisibles à la lumière naturelle, incorporées dans le papier, pour en faire un détection visuelle subséquente par éclairage du papier avec de la lumière ultraviolette, est **caractérisé en ce qu'**il consiste en le comptage des fibrilles présentes dans les papiers de valeur, l'utilisation pour ce faire, en tant que moyen de capture de l'image des fibrilles (2) sur le papier (1), d'une caméra vidéo (4) fournissant lesdites images à un ordinateur (5), muni d'une carte d'acquisition permettant un réglage de la brillance, du contraste et de la saturation de l'image capturée, à 24 bits et sous un format BMP non compressé, l'image capturée étant traitée au moyen des processus numériques suivants :
- obtention, à partir de l'histogramme de l'image (16), pour chaque groupe de fibrilles rouges, vertes et bleues, de l'intervalle de couleur HSL (teinte, saturation, valeur), en tentant d'obtenir, indépendamment et avec chaque couleur, l'histogramme pour le gain, pour la saturation et pout la luminosité, avec un intervalle de valeur maximale ;
- calcul de seuil (17), consistant à fournir les pixels de l'image avec la couleur (rouge, verte ou bleue) correspondante, tombant dans les intervalles HSL correspondant à chaque groupe de fibrilles (rouges, vertes ou bleues), tandis que les pixels tombant hors desdits intervalles sont changés en noir ;
- soustraction (18) des particules de l'image ayant une taille plus petite qu'un certain nombre de pixels, pour éliminer le bruit et les grains de poussières, parmi d'autres sources d'interférence ;
- des érosions et des dilatations (19), pour relier des particules qui, simples, ont été séparées dans l'image et pour séparer celles ayant été reliées ;
- des convolutions (20), en appliquant différents filtres (passe-haut, passe-bas), pour mettre en évidence ou pour adoucir différents aspects de l'image ;
- une analyse morphologique (21), pour découvrir le nombre de fibres de chaque couleur, la taille des fibres, la position et le centre de gravité ;
- une validation (22) de l'image selon des spécification préétablies, de manière à déterminer si l'échantillon du papier de valeur analysé est ou non dans les limites desdites spécifications, de manière qu'il soit accepté ou rejeté.

2. Dispositif pour la mise en oeuvre de la procédure de contrôle selon la revendication précédente, comprenant un système d'éclairage (3) du papier (1) porteur des fibrilles (2) colorées, une caméra (4), en tant que moyens d'acquisition d'images, et un ordinateur (5) muni d'une carte d'acquisition, **caractérisé en ce qu'**il comprend en outre :
un boîtier (7), muni d'une plateforme supérieure (8), dans lequel est établie une zone transparente (9) pour placer le papier (1), sous laquelle est monté un panneau lumineux (10), avec plusieurs lampes à fluorescence à rayonnement dans l'ultraviolet, qui éclaire le papier (1) par rétro-éclairage, montant de ladite plateforme (8) une tour (11) dans laquelle est logé, à nu niveau inférieur, un deuxième panneau lumineux (13), similaire au précédent, en une position perpendiculaire par rapport à la plate forme (8) et avec lequel coopère un miroir (14), ledit miroir étant placé dans la face opposée de la tour (11), de préférence dans le couvercle (12) pour le fermer, de manière que, par ce miroir (14), on obtienne un éclairage frontal et diffus du papier, tandis que, dans la zone supérieure de la tour, la caméra vidéo (4) est montée, dans une disposition perpendiculaire à la plateforme (8) et sa lentille étant accompagnée d'au moins un filtre, permettant seulement à la composante visible du spectre de passer, éliminant les composantes infrarouges et ultraviolettes.

3. Dispositif selon la revendication 2, **caractérisé en ce que** la caméra (4) est une caméra 3-CCD, avec réglage du gain RVB, de la température de couleur et du blanc de référence, parmi d'autres choses.

4. Dispositif selon les revendications 2 et 3, **caractérisé en ce que** le système d'éclairage (3 à 10, 13) est accompagné d'un clavier de commande (15) permettant une commutation marche/arrêt générale et la mise sous tension indépendante de chacun des panneaux lumineux (10 à 13).

5. Programme informatique pour la mise en oeuvre de la procédure de la revendication 1.
